# EUROPÄISCHE PATENTANMELDUNG

(11) **EP 1 521 497 A2**
(43) Veröffentlichungstag der Anmeldung: **06.04.2005**
(21) Anmeldenummer: 04022414.9
(22) Anmeldetag: 21.09.2004
(51) Int. Cl.: H04Q 11/04, H04L 12/56, H04L 12/64

(54) **Universal-Vermittlungsstelle, Verfahren zum Durchführen einer Vermittlungsaufgabe, Eingangseinheit, Ausgangseinheit und Anschlusseinheit**

(30) Priorität: 30.09.2003 EP 03292400; 17.07.2004 DE 10034685
(71) Anmelder: ALCATEL, 75008 Paris (FR)
(72) Erfinder: Eilenberger, Gert, Dr., 73230 Kirchheim (DE); Bunse, Stephan, 70565 Stuttgart (DE)
(74) Vertreter: Brose, Gerhard, Dipl.-Ing.

(57) **Zusammenfassung**

Die Erfindung betrifft eine Universal-Vermittlungsstelle zur Vermittlung von Datenströmen mit einer Mehrzahl von Eingängen, einer Mehrzahl von Ausgängen und einem Koppelnetzwerk mit einer Mehrzahl von Eingängen, die jeweils über eine Eingangseinheit (L1, L2) mit einem Eingang aus der Mehrzahl von Eingängen der Universal-Vermittlungsstelle verbunden sind und einer Mehrzahl von Ausgängen, die jeweils über eine Ausgangseinheit (L1, L2) mit einem Ausgang aus der Mehrzahl von Ausgängen der Universal-Vermittlungsstelle verbunden sind und einem Aufbau des Koppelnetzwerks als synchrones Zeitmultiplex-Koppelnetz, wobei jede Eingangseinheit Mittel (L2) aufweist, um dem Datenstrom vor dem Aufteilen auf Zeitschlitze Informationen beizufügen, die nach dem Aufteilen des Datenstroms in Datenpaketteile ermöglichen, daß diese Datenpaketteile sich selbst durch das Koppelnetzwerk leiten, sowie eine Vermittlungsstelle, ein Verfahren zum Durchführen einer Vermittlungsaufgabe, eine Eingangseinheit (L1, L2), eine Ausgangseinheit (L1, L2) und eine Anschlußeinheit (CP).

## Beschreibung

Die Erfindung betrifft eine Universal-Vermittlungsstelle nach dem Oberbegriff des Anspruchs 1, ein Verfahren zum Durchführen einer Vermittlungsaufgabe nach dem Oberbegriff des Anspruchs 4, eine Eingangseinheit nach dem Oberbegriff des Anspruchs 5, eine Ausgangseinheit nach dem Oberbegriff des Anspruchs 6 und eine Anschlußeinheit nach dem Oberbegriff des Anspruchs 7.

Das derzeitige weltweite Telekommunikationsnetz setzt sich zusammen aus einer Vielzahl von Teilnetzen, die mit verschiedenen Formaten und Protokollen arbeiten. Nur stichwortartig sollen hier ISDN, SDH, IP, ATM und Ethernet als Beispiele genannt werden. Als Verbindungsarten kommen dabei sowohl geschaltete Verbindungen oder virtuelle Verbindungen, aber auch einzelne Datagramme mit komplettem Adreß- und Datenteil in Frage. Allen gemeinsam ist, daß dabei in irgend einer Form vermittelt wird, daß also ein Datenstrom sowohl abschnittsweise als auch zeitlich sich die physikalischen Netzmittel mit anderen Datenströmen teilt, und daß dazwischen umgeschaltet werden muß. Gerade auch zu diesem Zweck sind all diese vielen Teilnetze untereinander verbunden.

Herkömmlicherweise weist nun jedes einzelne dieser Teilnetze seine eigenen Vermittlungseinrichtungen auf. Je nach dem Datenformat, das im jeweiligen Teilnetz verwendet wird, spricht man dann etwa von einer Vermittlungsstelle, einem Router oder einem Cross-Connect, wobei häufig die eigentlich englischen Begriffe als deutsche verwendet werden. Der Anteil der Verkehrsarten am Gesamtverkehr und damit der Anteil in einzelnen Teilnetzen schwankt sowohl kurzfristig (Tageszeiten und Wochentage) als auch langfristig durch die technische Entwicklung bedingt. Außerdem müssen immer wieder neue Teilnetze mit neuartigen vermittelnden Einrichtungen nicht nur entwickelt, sondern vor allem auch aufgebaut werden.

In der US-Patentanmeldung US 2002/0191588 A1 wird ein Vermittlungssystem beschrieben, mit dessen Hilfe Datenpakete zur Vermittlung in einem Koppelnetzwerk derart aufgeteilt werden, daß sie in periodisch wiederkehrenden Zeitschlitzen fester Länge verschickt werden können. Allerdings werden dort die Aufteilung und der Weg der Datenpakete durch eine externe Steuereinheit geregelt, was sowohl zeit- als auch kostenintensiv ist.

Im folgenden werden die verschiedenen Formate, Protokolle oder Verkehrsarten vereinfachend als Übertragungsformate bezeichnet; die verschiedenen vermittelnden Einrichtungen werden als Vermittlungsstelle bezeichnet. Alle Daten, die zusammen gehören und innerhalb einer solchen Vermittlungsstelle gleich behandelt werden, werden als Nachricht bezeichnet; eine solche Behandlung wird als Vermitteln bezeichnet.

Der Erfindung liegt die Aufgabe zugrunde, an der oben beschriebenen Situation Abhilfe zu schaffen.

Diese Aufgabe wird erfindungsgemäß gelöst durch eine Universal-Vermittlungsstelle nach der Lehre des Anspruchs 1 ein Verfahren nach der Lehre des Anspruchs 4, eine Eingangseinheit nach der Lehre des Anspruchs 5, eine Ausgangseinheit nach der Lehre des Anspruchs 6 und eine Anschlußeinheit nach der Lehre des Anspruchs 7.

Es wird also für alle Übertragungsformate dieselbe Vermittlungsstelle verwendet. Dabei werden alle zu vermittelnden Nachrichten in untereinander gleich lange, jedoch sehr kurze, Einheiten aufgeteilt, vorzugsweise von der Länge eines Bytes. Das Koppelfeld ist ein synchrones Zeitmultiplex-Koppelnetzwerk, das für die Vermittlung solch kurzer Einheiten geeignet ist. Die Anpassung der verschiedenen Übertragungsformate erfolgt an der Peripherie in geeigneten Eingangs- und Ausgangseinheiten.

Für besonders aufwendige oder nur wenig benötigte Anpassungen von Übertragungsformaten können zusätzliche Anschlußeinheiten an das Koppelnetzwerk angeschlossen werden, die dann von den Eingangseinheiten aus mehr oder weniger transparent erreicht werden können und die dann die Ausgangseinheiten auch wieder mehr oder weniger transparent erreichen können. Derartige Anschlußeinheiten sind nicht nur zur Anwendung bei der vorliegenden Universal-Vermittlungsstelle geeignet, sondern auch bei andersartigen Vermittlungsstellen, etwa solchen, die nicht auf synchroner Basis arbeiten oder bei solchen, die nicht auf kurze Dateneinheiten beschränkt sind.

Da an einer solchen Vermittlungsstelle verschiedene Teilnetze zusammen kommen, kann hier auch auf einfache Weise ein Netzübergang erfolgen, indem die Funktion eines sogenannten Gateways durch die Peripherie dieser Vermittlungsstelle mit übernommen wird, sei es durch eine Eingangseinheit, eine Ausgangseinheit, eine Anschlußeinheit oder durch eine Kombination davon.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt einen beispielhaften Ablauf in einer erfindungsgemäßen Eingangseinheit.
- Figur 2: zeigt einen Datenpaketaufbau für das Beispiel nach Figur 1.
- Figur 3: zeigt ein Ausführungsbeispiel einer erfindungsgemäßen Universal-Vermittlungsstelle.
- Figur 4: zeigt ein Ausführungsbeispiel einer erfindungsgemäßen Anschlußeinheit.

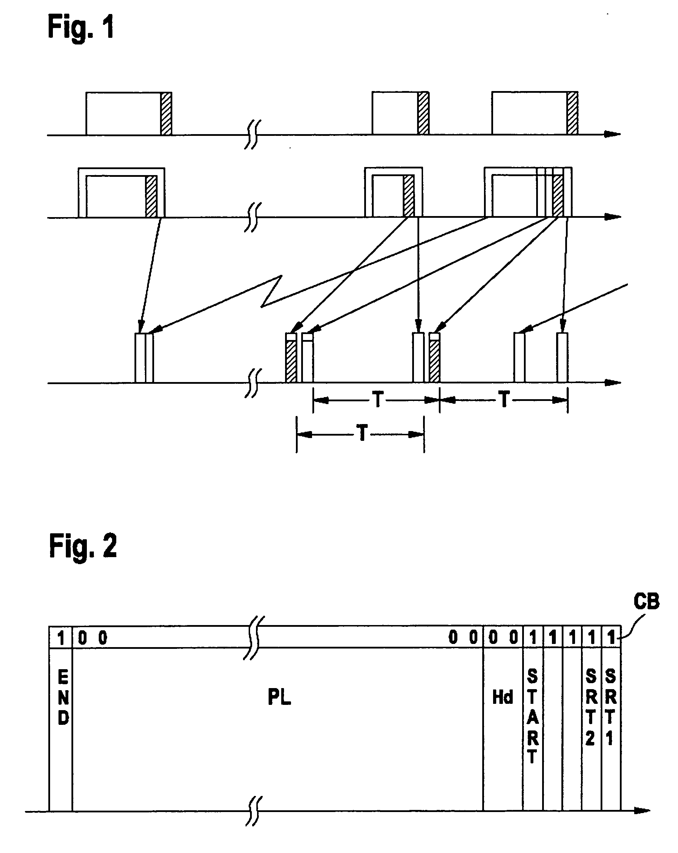

Anhand der Figur 1 wird zunächst der hinter der Erfindung stehende Grundgedanke näher erläutert. Hierzu wird auch auf die Patentanmeldung EP 0 320 714 A2 und das entsprechende US-Patent 4,922,487 verwiesen und auf die dortigen Ausführungen Bezug genommen.

Die erste Zeile von Figur 1 zeigt einen an einem Eingang einer Vermittlungsstelle ankommenden Datenstrom. An einem anderen Eingang derselben Vermittlungsstelle kann ein grundsätzlich anders aufgebauter Datenstrom ankommen. Zwischen den Eingängen der Vermittlungsstelle und den Eingängen des Koppelnetzwerks sind jeweils Eingangseinheiten vorhanden, die einerseits die übertragungstechnischen Erfordernisse erfüllen und andererseits an das interne Format des Koppelnetzwerks anpassen. Nur die Anpassung an das interne Format des Koppelnetzwerks wird hier näher betrachtet.

Der hier gezeigte Datenstrom besteht aus einer Folge von Datenpaketen unterschiedlicher Länge, zwischen denen Pausen existieren. Die Datenpakete liegen völlig asynchron zueinander. Jedes Datenpaket weist einen Paketkopf (geschwärzt) und eine Nutzlast (hell) auf. Der Paketkopf kann eine vollständige Adressierung mit Angabe des Absenders und des Empfängers enthalten; er kann aber auch einen Bezug auf einen voreingestellten Verbindungsweg enthalten. Beide Varianten sind an sich allgemein bekannt.

Wie die zweite Zeile von Figur 1 zeigt, wird dieser Datenstrom für die interne Verarbeitung in der Vermittlungsstelle aufbereitet. Hierzu wird, wie anhand von Figur 2 näher gezeigt werden wird, Zusatzinformation beigefügt, die die Verarbeitung innerhalb des Koppelnetzwerks ermöglicht.

Die dritte Zeile zeigt nun den Datenstrom am Eingang des Koppelnetzwerks. Durch Pfeile wird der Übergang von der zweiten zur dritten Zeile dargestellt. Entsprechend dem internen Aufbau des Koppelnetzwerks wird nun jedes Datenpaket in einzelne Datenpaketteile aufgeteilt, die der Zeitschlitzlänge im Koppelnetzwerk entsprechen. Diese Datenpaketteile werden nun so in einen synchronen zeitlichen Ablauf gebracht, daß sie innerhalb des Datenstroms in gleichen zeitlichen Abschnitten von der Länge T auftreten. Diese Länge T ist die Rahmenlänge aller synchronen Abläufe innerhalb des Koppelnetzwerks. Zunächst wird das erste Datenpaketteil des ersten Datenpakets in einen freien Zeitschlitz des Ausgangsdatenstroms der Eingangseinheit eingefügt. Die weiteren Datenpaketteile dieses Datenpakets werden nun im Abstand einer Rahmenlänge T in diesen Datenstrom eingefügt. Dazwischen kommen noch Datenpaketteile von vorangegangenen Datenpaketen. Derselbe Ablauf ergibt sich für alle folgenden Datenpakete.

Grundsätzlich kann es auch, etwa für lange Datenpakete, zugelassen werden, daß einem Datenpaket mehr als ein Zeitschlitz innerhalb der Rahmenlänge T zugewiesen wird. Bei zwei zugewiesenen Zeitschlitzen haben dann alle Datenpaketteile mit ungerader laufender Nummer untereinander den Abstand T, ebenfalls alle Datenpaketteile mit gerader laufender Nummer. Das zweite Datenpaketteil folgt auf das erste mit einem Abstand, der kleiner als T ist. Der mittlere Abstand ist damit T/2. Entsprechendes gilt für mehr als zwei zugewiesene Zeitschlitze.

Hier wird unterstellt, daß die Ausgangskapazität der Eingangsschaltung mindestens so groß ist wie die Eingangskapazität. Durch die beim Übergang von der ersten zur zweiten Zeile in Figur 1 hinzukommende Zusatzinformation ergibt sich insgesamt mehr Nutzinformation als am Eingang. Möglicherweise sind im Eingangdatenstrom von der Übertragung herrührende Lücken, "Gaps", dann brauchen keinerlei weitere Maßnahmen ergriffen werden. Manchmal ist auch aus anderen Gründen sichergestellt, daß auf einer bestimmten Eingangsleitung einer Vermittlungsstelle die Datenstromdichte geringer ist als an einem Eingang zum Koppelnetzwerk; auch hier sind allenfalls Pufferspeicher erforderlich. Andernfalls muß entweder in sinnvoller Weise auf mehrere Ausgangsdatenströme aufgespalten werden oder der interne Takt muß höher sein.

Figur 2 zeigt einen beispielhaften Datenpaketaufbau, wie er sich im Beispiel nach Figur 1 in der zweiten Zeile ergibt. Mit PL für "Payload" ist die eigentliche Nutzlast bezeichnet. Sie ist hier als Block unbestimmter Länge und einer Breite von einem Byte (8 Bit) dargestellt. Die Breite von 8 Bit ergibt sich durch Serien-Parallel-Wandlung aus dem üblicherweise seriell übertragenen Datenstrom. Im Normalfall entspricht dies auch einer Gliederung der zu übertragenden Nutzlast. Dies ist aber letztlich unerheblich; jede andere Breite ist möglich. Dieser Nutzlastinhalt muß auf jeden Fall unverändert weitergereicht werden und kann auch nicht inhaltlich ausgewertet werden. Diese Nutzlast ist in Figur 1 auch schon in der ersten Zeile enthalten, wenngleich möglicherweise in einem anderen zeitlichen Maßstab.

Mit Hd für "Header" ist in Figur 2 ein Paketkopf bezeichnet. Im gezeigten Beispiel ist er zwei Bytes lang. Datenpakete werden nahezu ausschließlich nicht synchron übertragen. Damit ist zumindest gemeint, daß zur selben Nachricht gehörende Datenpakete im gesamten Datenstrom nicht in gleichmäßigen Abständen aufeinander folgen. Die Zusammengehörigkeit von Datenpaketen zu einer Nachricht kann damit nicht an der zeitlichen Lage im Datenstrom erkannt werden. Dieser Kennzeichnung dient der Inhalt des Paketkopfs.

Zumindest dann, wenn ein einzelnes Datenpaket in sich bereits eine vollständige Nachricht enthält, und damit ein sogenanntes Datagramm darstellt, muß der Paketkopf zumindest eine vollständige Adressierung des Empfängers enthalten. In vielen anderen Fällen wird eine Nachricht aus einer Vielzahl von Datenpaketen bestehen oder es werden gar mehrere Nachrichten, etwa beim Surfen im Internet, von demselben Absender zu demselben Empfänger auf einem voreingestellten Weg übertragen werden. In diesem Fall reicht es aus, wenn der Paketkopf an jeder Stelle des Netzes eindeutig einem bestimmten aus einer begrenzten Zahl von (virtuellen) Übertragungswegen zugeordnet werden kann. In diesem Fall muß, wie schon genannt, zunächst der Übertragungsweg markiert werden, wobei auf jedem Übertragungsabschnitt eine eigene Zuordnung eines Übertragungskanals erfolgen wird. Es genügt dann, wenn die jeweilige Zuordnung im Paketkopf genannt ist. Allerdings muß dann an der Grenze zwischen zwei Übertragungsabschnitten eine Umwertung des Inhalts des Paketkopfs erfolgen muß. Dies kann im Beispiel beim Übergang von der ersten zur zweiten Zeile in Figur 1 erfolgen. Bei der erfindungsgemäß aufgebauten Universal-Vermittlungsstelle wird intern, im Koppelnetzwerk, keine solche Adressierung benötigt. Es können deshalb bereits die Angaben für den auf die Vermittlungsstelle folgenden Übertragungsabschnitt hier eingetragen werden. In diesem Fall kann die Umwertung auch am Ausgang des Koppelnetzwerks, also in einer Ausgangseinheit, erfolgen.

Zusätzlich für die interne Bearbeitung im Koppelnetzwerk wird nun der Nutzlast PL und dem Paketkopf Hd intern benötigte Information hinzugefügt.

Zunächst sind zwei Bytes SRT1 und SRT2 gezeigt, die der internen Wegewahl im Koppelnetzwerk dienen. Dieses Beispiel geht von einem Koppelnetzwerk aus, bei dem die Einstellung der internen Wege nicht durch eine zentrale Steuerung erfolgt, sondern bei dem die Nachricht selbst ihren Weg aufbaut. Die zwei Bytes SRT1 und SRT2 enthalten die dafür benötigte Steuerinformation; sie werden auch als Self Routing Tags bezeichnet.

Den zwei Bytes SRT1 und SRT2 folgen zwei hier nicht näher interessierende oder auch nur als Reserve vorgesehene und auch nicht bezeichnete Bytes, die wiederum von einem Startkennzeichen START gefolgt werden. Diesem Startkennzeichen START folgt der Paketkopf Hd und die Nutzlast PL. Das Ende ist durch ein Schlußkennzeichen END gekennzeichnet.

Da das Ende des Pakets auf jeden Fall erkennbar sein muß, muß das Schlußkennzeichen END auf alle Fälle im Datenstrom als solches erkennbar sein. Es ist aber grundsätzlich nicht auszuschließen, daß innerhalb der Nutzlast PL ein Byte auftritt, das dieselbe Bitfolge aufweist wie das Schlußkennzeichen END. Deshalb wird hier jedem Byte ein Steuerbit CB zugeordnet, das alle zusätzlich hinzugekommenen Bytes, hier mit einer "1" kennzeichnet, während die Bytes des Datenpakets selbst mit einer "0" gekennzeichnet sind.

Dadurch, daß innerhalb des Koppelnetzwerks der Zusammenhang der einzelnen Datenpaketteile aufgelöst wird, ist auch die Verbindung von Nutzlast und Adresse innerhalb des Koppelnetzwerks nicht mehr erkennbar. Die Zugehörigkeit eines Datenpaketteils zu einer Nachricht muß auf andere Art gewährleistet werden. Dies wird hier durch die gleichen Zeitabstände, Länge T, gewährleistet. Das Koppelnetzwerk muß deshalb synchron arbeiten. Die Zeitschlitzlänge innerhalb der entstehenden Rahmenstruktur ist dann gleich einem Datenpaketteil.

Die anhand der Figur 1 beschriebene Zuordnungsvorschrift zwischen einem Datenpaket am Eingang einer Eingangseinheit und den Datenpaketteilen am Ausgang dieser Eingangseinheit ist eindeutig und umkehrbar. Die zusammengehörigen Datenpaketteile eines Datenpakets werden in der gleichen zeitlichen Anordnung auch wieder an einem Ausgang des Koppelnetzwerks ankommen. In einer dort angeordneten Ausgangseinheit wird dann die anhand der Figur 1 beschriebene Zuordnung wieder umgekehrt, so daß dann wieder die ursprünglichen Datenpakete, in der Regel mit umgewertetem Paketkopf, auftreten. Damit ergibt sich sowohl der Aufbau einer Eingangseinheit als auch der einer Ausgangseinheit einer erfindungsgemäßen Universal-Vermittlungsstelle.

Figur 2 paßt insoweit nicht mit Figur 1 zusammen, als dort der dem Paketkopf vorangehende Teil den gleichen Umfang aufweist wie der Paketkopf. Auf die absoluten Werte kommt es aber nicht an.

Entscheidend dabei ist jedenfalls, daß die Datenpaketteile nach Figur 1 und damit die Zeitschlitzlänge innerhalb des Koppelnetzwerks kurz sind. In der oben in Bezug genommenen Patentanmeldung EP 0 320 714 A2 und dem entsprechenden US-Patent 4,922,487 wurde bereits auf einen wesentlichen Vorteil solcher kurzer Datenpaketteile hingewiesen. Der Speicheraufwand innerhalb des Koppelnetzwerks kann gegenüber anderen Konzepten drastisch reduziert werden. Durch die Verteilung eines Datenpakets auf einen größeren Zeitraum wird auch die Auslastung des Koppelnetzwerks gleichmäßiger; bei gleichem Aufwand wird die Blockierungsfreiheit größer. Der Nachteil der zusätzlichen Verzögerung bleibt erhalten.

Bei der jetzt vorliegenden Erfindung ist aber ein anderer Punkt wesentlich. Innerhalb des Koppelnetzwerks treten ausschließlich sehr kurze zu vermittelnde Datenelemente auf. In solche kurzen Datenelemente kann aber letztlich jedes Übertragungsformat aufgelöst werden. Eine so aufgebaute Vermittlungsstelle kann damit zur Vermittlung von Nachrichten in beliebigen Übertragungsformaten verwendet werden. Die Anpassung an diese Übertragungsformate erfolgt in den Eingangs- und Ausgangseinheiten. Nur diese sind an das jeweilige Übertragungsformat anzupassen und gegebenenfalls für neue Übertragungsformate zu entwickeln. Auch sind nur dort die möglicherweise benötigten größeren Zwischenspeicher erforderlich. Die Arbeit solcher Eingangs- und Ausgangseinheiten kann programmgesteuert ablaufen. Die Anpassung an andere Übertragungsformate kann dann durch Änderung des Ablaufprogramms erfolgen. Entsprechend kann die Umschaltung zwischen zwei Übertragungsformaten durch Umschalten zwischen zwei Ablaufprogrammen erfolgen.

Anhand der Figur 1 wurde ein Übertragungsformat beschrieben, bei dem einzelne, ungleich lange Datenpakete mit dazwischen liegenden Übertragungslücken auftreten. Ein anderes Datenformat ist beispielsweise ein Strom von SDH-Containern in einem SDH-Datenstrom, etwa der STM-1-Hierarchie. Hier wird dann in einer Eingangseinheit ähnlich wie im Beispiel nach Figur 1 jeder Container in eine Vielzahl aufeinanderfolgender Containerteile zerlegt, denen dann ein synchroner Pfad durch das Koppelnetzwerk zugewiesen wird und die dort wieder byteweise durchgeschaltet werden. Die zusammengehörigen Containerteile werden dann in derjenigen Ausgangseinheit, zu der hin sie durchgeschaltet wurden, wieder zu einem SDH-Container zusammengesetzt.

Grundsätzlich ist hier als weiteres Übertragungsformat ein übliches synchrones Zeitmultiplexformat, etwa PCM 30/32, möglich.

Grundsätzlich ist es nun möglich, daß eine solche Universal-Vermittlungsstelle ausschließlich Eingangseinheiten und Ausgangseinheiten aufweist, die alle für dasselbe Übertragungsformat aufgebaut oder auf dieses eingestellt sind. Ein Teil der Eingangs- und Ausgangseinheiten mag dann dem Fernverkehr, ein anderer Teil dem lokalen Verkehr dienen und damit unter anderem auch die Funktion eines Add-Drop-Multiplexers mit übernehmen.

Eine andere solche Universal-Vermittlungsstelle kann dann in entsprechender Weise ausschließlich für ein anderes Übertragungsformat aufgebaut oder eingestellt sein. Sie kann dann beispielsweise die Funktion eines Cross-Connects übernehmen.

In der Regel sind aber die einzelnen Teilnetze für die verschiedenen Übertragungsformate nicht räumlich völlig voneinander getrennt. Sie überlagern sich vielmehr und oft sind die "Vermittlungsstellen" für die einzelnen den jeweiligen Diensten zugeordneten Übertragungsformate auch organisatorisch und damit auch räumlich vereint. Auch treten dort in der Regel Übergänge, "Gateways", zwischen den verschiedenen Teilnetzen auf, wo auch zwischen den Übertragungsformaten konvertiert werden muß. In einer erfindungsgemäßen Universal-Vermittlungsstelle kann nun problemlos zwischen zwei solchen Teilnetzen übergegangen werden. Die Gateway-Funktion kann dann entweder in der betroffenen Eingangseinheit oder in der Ausgangseinheit mit ausgeführt werden.

Eine erfindungsgemäße Universal-Vermittlungsstelle, die für zwei oder mehr solcher Teilnetze Vermittlungsfunktion ausführt, ist allerdings in der Regel hierfür überdimensioniert. Ein Teil dieser Universal-Vermittlungsstelle, etwa zwischen a Eingangsleitungen und a Ausgangsleitungen mit a Eingangseinheiten und a Ausgangseinheiten und der dazwischenliegende Teil des Koppelnetzwerks mit einer a x a -Struktur wird dann für das erste Teilnetz verwendet. Ein anderer Teil dieser Universal-Vermittlungsstelle, etwa zwischen b Eingangsleitungen und b Ausgangsleitungen mit b Eingangseinheiten und b Ausgangseinheiten und der dazwischenliegende Teil des Koppelnetzwerks mit einer b x b -Struktur wird dann für das zweite Teilnetz verwendet. Insgesamt ist aber ein Koppelnetzwerk erforderlich mit einer N x N -Struktur, wobei N mindestens gleich a + b ist. Die Übergänge zwischen den a Eingangsleitungen und den b Ausgangsleitungen und zwischen den b Eingangsleitungen und den a Ausgangsleitungen sind genauso bestückt wie die von a nach a oder b nach b. Sie werden aber in der Regel nur für die Gateway-Funktion verwendet, die meist geringer ausgelastet ist.

Die erfindungsgemäße Universal-Vermittlungsstelle bringt in diesem Beispiel aber schon dann Vorteile, wenn die beiden Teilnetze von ihrer Funktion her sich an verschiedene Anwender, etwa an geschäftliche und private Nutzer, wendet und dadurch solchen tageszeitlichen Schwankungen unterworfen ist, daß sich ihre Gesamtbelastung weniger ändert als die Belastung der beiden Teilnetze. Wenn die Auslastungen der beiden Teilnetze atmen, dann können auch die Netze als solche atmen. Insbesondere die Verbindungsleitungen zwischen zwei Vermittlungsstellen können dann zeitweise die eine Verkehrsart und zeitweise die andere Verkehrsart führen. Dazu müssen nur die Eingangseinheiten und Ausgangseinheiten zwischen den beiden Verkehrsarten oder Übertragungsformaten umgeschaltet und damit dem anderen Teilnetz zugeordnet werden.

So wie im zuletzt beschriebenen Beispiel tägliche Schwankungen vorkommen, so ändern sich die Auslastungen verschiedener Teilnetze auch im Laufe längerer Zeiträume, etwa bei der Einführung neuer Übertragungsformate. Bei einer erfindungsgemäßen Universal-Vermittlungsstelle müssen dann eben nach und nach die Eingangs- und Ausgangseinheiten auf das neue Übertragungsformat umgestellt oder durch entsprechende neue ersetzt werden. Der Rest, insbesondere das Koppelnetzwerk und dessen Steuerung, kann unverändert bleiben. Eine an sich bestehende Überdimensionierung kann dadurch mehr als gerechtfertigt sein.

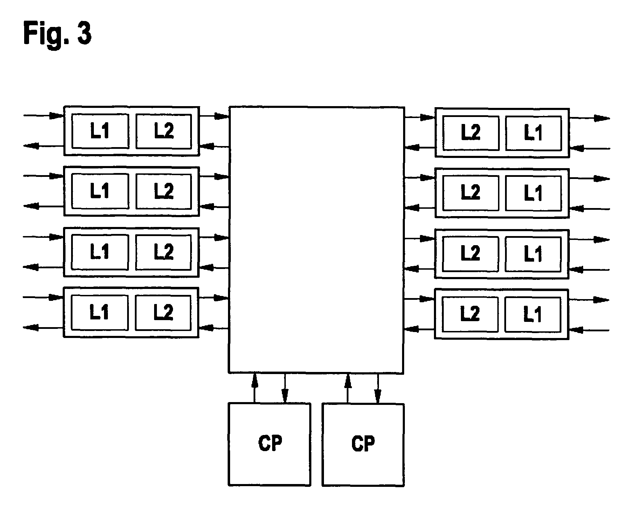

Figur 3 zeigt nun ein Beispiel einer kompletten Universal-Vermittlungsstelle, die in dieser Darstellung wie jede andere Vermittlungsstelle aussieht. Sie weist einen hier nicht näher bezeichneten Kern, das Koppelnetzwerk auf, sowie eine Reihe daran angeschlossener Leitungseinheiten. Weiter sind hier zwei Zentralprozessoren CP angeschlossen. Sowohl die Leitungseinheiten als auch die Zentralprozessoren sind bidirektional an das Koppelnetzwerk angeschlossen. Die Leitungseinheiten weisen auch bidirektionale Verbindungen zur Außenwelt auf, die Zentralprozessoren nicht.

Grundsätzlich kann man Vermittlungsstellen auch in unidirektionaler Weise darstellen. Der Verkehrsfluß ist dann meist von links nach rechts dargestellt und jede Leitungseinheit ist in eine, dann links angeordnete, Eingangseinheit und eine, dann rechts angeordnete, Ausgangseinheit aufgeteilt. Zusatzeinheiten wie die hier dargestellten Zentralprozessoren sind dann wie rückkoppelnde Einheiten zwischen einem Ausgang des Koppelnetzwerks rechts und einem Eingang des Koppelnetzwerks links dargestellt.

Die Leitungseinheiten sind hier in je zwei Blöcke untergliedert, die die Bezeichnungen L1 und L2 tragen. L1 und L2 steht zunächst für "Layer 1" bzw. "Layer 2". Damit soll noch nichts über ihren Aufbau, sondern nur über ihre Funktion gesagt werden. Der Aufbau verschiedener gleich bezeichneter Baugruppen kann unterschiedlich sein. Die Schicht 1, "Layer 1", ist im wesentlichen für die physikalische Anpassung zuständig. Dies sind Größen wie elektrisches oder optisches Signal, Signalpegel, Takt und dergleichen. Die Schicht 2, "Layer 2", ist im wesentlichen für die protokollmäßige Anpassung zuständig. Letztere ist gerade bei der hier vorliegenden Universal-Vermittlungsstelle nicht für alle Leitungseinheiten gleich.

Zentralprozessoren wie die hier gezeigten sind für vielfältige Funktionen verwendbar. Hier sollen sie nun auch erfindungsgemäß als Anschlußeinheiten zur Entlastung von Eingangs- oder Ausgangseinheiten dienen. Insbesondere solche Übertragungsformate, bei deren Vermittlung größere Datenmengen zwischengespeichert werden müssen, bei denen auf größere Tabellen zugegriffen werden muß oder die einer Gateway-Funktion unterzogen werden sollen, können unter Mithilfe solcher Anschlußeinheiten vermittelt werden. Dazu muß diejenige Eingangseinheit, an der ein Datenstrom mit diesem Übertragungsformat ankommt, diesen Datenstrom weitgehend transparent zu einer solchen Anschlußeinheit weiterleiten. Diese übernimmt dann soweit wie möglich die Funktion einer Eingangseinheit und ggf. die eines Gateways. Von der Anschlußeinheit aus werden die Datenpakete dann über das Koppelnetzwerk zu einer weiteren Anschlußeinheit gesendet, die in diesem Fall die Aufgabe einer Ausgangseinheit und ggf. die eines Gateways übernimmt. Von hier aus wird dann wieder weitgehend transparent zu einer Ausgangseinheit durchgeschaltet. Die beiden Aufgaben der Eingangseinheit und der Ausgangseinheit können dabei auch von einer einzigen Anschlußeinheit übernommen werden.

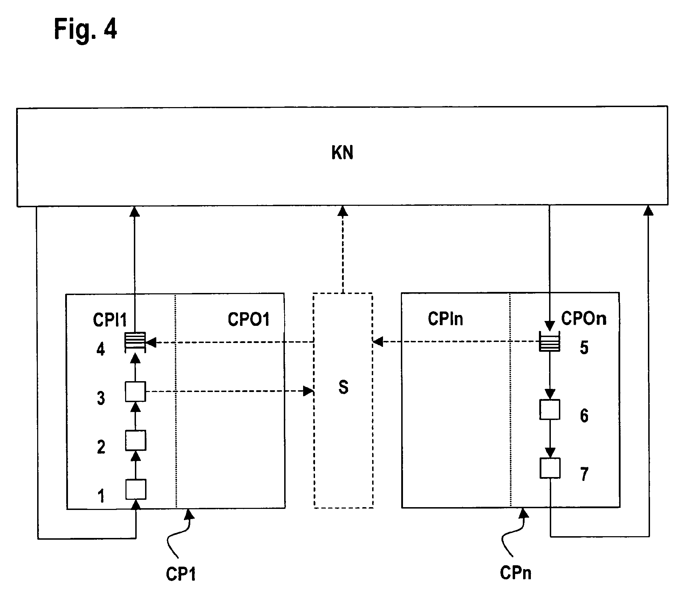

Anhand von Figur 4 kann der Ablauf der Verarbeitung der Datenströme in den Anschlußeinheiten genauer beschrieben werden.

Figur 4 zeigt ein Koppelnetzwerk KN, sowie exemplarisch ein Paar Anschlußeinheiten CP1 und CPn mit ähnlichem Aufbau, die an das Koppelnetzwerk KN angeschlossen sind. Die Anschlußeinheiten CP1 und CPn sind dabei funktional in einen Eingangsteil CPI1 bzw. CPIn und einen Ausgangsteil CPO1 bzw. CPOn aufgeteilt.

Die Eingangsteile CPI1 bzw. CPIn weisen eine Einheit zur Defragmentierung, gekennzeichnet mit 1, eine Einheit zum Deframing, die zudem die Datenpakete zerlegt, gekennzeichnet mit 2, eine Routing Tabelle, gekennzeichnet mit 3 und einen Datenpuffer, gekennzeichnet mit 4, auf. Die Ausgangsteile CPO1 bzw. CPOn wiederum weisen einen Datenpuffer, gekennzeichnet mit 5, eine Einheit zum Framing, gekennzeichnet mit 6 und eine Einheit zur Fragmentierung durch Virtual Concatenation, gekennzeichnet mit 7, auf.

Die Eingänge der Eingangsteile CPI1 bzw. CPIn der Anschlußeinheiten CP1 bzw. CPn sind je mit einem der Ausgänge des Koppelnetzwerks KN verbunden, und die Ausgänge der Eingangsteile CPI1 bzw. CPIn der Anschlußeinheiten CP1 bzw. CPn sind je mit einem der Eingänge des Koppelnetzwerks KN verbunden. Die Eingänge der Ausgangsteile CPO1 bzw. CPOn der Anschlußeinheiten CP1 bzw. CPn sind je mit einem der Ausgänge des Koppelnetzwerks KN verbunden, und die Ausgänge der Ausgangsteile CPO1 bzw. CPOn der Anschlußeinheiten CP1 bzw. CPn sind je mit einem der Eingänge des Koppelnetzwerks KN verbunden

Für den Fall, daß der interne Weg der Dateneinheiten durch das Koppelnetzwerk KN nicht durch die Nachricht selbst aufgebaut wird, übernimmt diese Aufgabe eine zentrale Steuerung, der sogenannte Scheduler S, der samt seiner Verbindungen zum Datenpuffer 4 und zur Routing Tabelle 3 des Eingangsteils CPI1 der Anschlußeinheit CP1, zum Datenpuffer 5 des Ausgangsteils CPOn der Anschlußeinheit CPn und zum Koppelnetzwerk KN eingezeichnet ist.

Von einer Eingangseinheit wird ein Datenstrom weitgehend transparent über das Koppelnetzwerk KN zum Eingangsteil CPI1 der Anschlußeinheit CP1 gesendet. Falls der Datenstrom durch das sogenannte Prinzip der Virtual Concatenation gebildet wurde, bei dem nicht benachbarte Fragmente von Datenstrukturen, wie z.B. Fragmente von sogenannten Virtuellen Containern bei SDH-Übertragung, zu einem Datenstrom zusammengefaßt werden, wird zunächst diese Virtual Concatenation in der Einheit zum Defragmentieren 1 rückgängig gemacht und die zusammengehörigen Fragmente werden zusammengesetzt.

Anschließend werden in der Einheit zum Deframing 2 die Frames der Datenpakete entsprechend ihrer Struktur wie z.B. GFP (Generic Framing Procedure), Ethernet oder ATM in kleine Dateneinheiten mit einer Größe von z.B. einem oder wenigen Bytes zerlegt, wie bereits bei der Beschreibung der Funktionalität der Eingangseinheit erwähnt.

In der Routing Tabelle 3 werden den Eingangsadressen der einzelnen Dateneinheiten Wege durch das Koppelnetzwerk und Ausgangsadressen, die den weiteren Weg der Dateneinheiten nach dem Durchlaufen der Vermittlungsstelle bestimmen, zugewiesen.

Wird der interne Weg durch das Koppelnetzwerk KN durch die Nachricht selbst aufgebaut, dann werden den Dateneinheiten Informationen über diesen Weg in Form von Self Routing Tags (SRT) von der Routing Tabelle 3 mitgegeben.

Falls der interne Weg durch das Koppelnetzwerk KN mittels einer zentralen Steuerung durch einen sogenannten Scheduler S über eine Schnittstelle zwischen Scheduler S und Koppelnetzwerk KN festgelegt wird, muß der Scheduler S dazu Informationen über das Routing von der Routing Tabelle 3 erhalten. Gemäß diesen Informationen schaltet der Scheduler S das Koppelnetzwerk KN für die Übertragung der einzelnen Dateneinheiten in die entsprechenden Positionen. Der Scheduler S ist damit für den Aufbau eines Wegs durch das Koppelnetzwerk KN nur erforderlich, wenn der Weg nicht durch die Nachricht selbst durch Self Routing Tags (SRT) aufgebaut wird.

Zum Speichern der Dateneinheiten steht der Datenpuffer 4 zur Verfügung, und das Versenden der Dateneinheiten durch das Koppelnetzwerk KN wird zentral durch den Scheduler S über die Schnittstelle zwischen dem Scheduler S und dem Datenpuffer 4 gesteuert, falls der Weg durch das Koppelnetzwerk KN nicht durch die Nachricht selbst durch Self Routing Tags (SRT) aufgebaut wird.

Nach dem Durchlaufen des Koppelnetzwerks KN gelangen die einzelnen Dateneinheiten zum Ausgangsteil CPOn der Anschlußeinheit CPn. Da die Datenrate am Eingang des Ausgangsteils dieser weiteren Anschlußeinheit CPOn höher sein kann als die externe Datenrate am Ausgang der Vermittlungsstelle, können die ankommenden Dateneinheiten zunächst in dem Datenpuffer 5 zwischengespeichert werden. Droht ein Überlauf dieses Datenpuffers 5, so kann mittels eines sogenannten Back Pressure Protokolls über die Schnittstelle zwischen dem Datenpuffer 5 des Ausgangsteils CPOn dieser Anschlußeinheit CPn und dem Scheduler S erreicht werden, daß der Scheduler S über die Schnittstelle zum Datenpuffer 4 des Eingangsteils CPI1 der ersten Anschlußeinheit CP1 die Datenrate durch das Koppelnetzwerk KN verringert. Ohne Scheduler S und Back Pressure Protokoll über die Schnittstelle zwischen dem Datenpuffer 5 und dem Scheduler S muß ein möglicher Überlauf des Datenpuffers 5 in Kauf genommen werden.

Um einen Datenstrom konstanter Datenrate zu erhalten, werden die Dateneinheiten anschließend in der Framingeinheit 6 einem Framing-Prozeß unterzogen, wie z.B. GFP (Generic Framing Procedure), Ethernet oder ATM.

Die Datenströme werden nun noch in der Fragmentiereinheit 7 durch Virtual Concatenation auf Datenpfaden entsprechend ihrer Ordnung zusammengefaßt, wobei laut Standard eine Zusammenfassung von Datenströmen verschiedener Ordnung, wie z.B. VC4 und VC12 durch Virtual Concatenation nicht erlaubt ist.

Über das Koppelnetzwerk KN werden daraufhin die verschiedenen Datenströme zu den entsprechenden Ausgangseinheiten gesendet. Dazu besitzt der Ausgangsteil der Anschlußeinheiten CPO1 bzw. CPOn eine Switching-Funktionalität, die regelt, wohin die verschiedenen Datenströme geschickt werden. Typischerweise besitzt ein Eingangsteil einer Anschlußeinheit CPI1 bzw. CPIn mehrere Eingänge, die mit verschiedenen Eingangseinheiten verbunden sein können, und ein Ausgangsteil einer Anschlußeinheit CPO1 bzw. CPOn mehrere Ausgänge, die mit verschiedenen Ausgangseinheiten verbunden sein können. Der Einfachheit halber sind in Figur 4 nur jeweils ein Eingang und ein Ausgang gezeichnet. Die Definition mehrerer Ports, d.h. Ausgangseinheiten, an die die Datenströme geschickt werden sollen, wird beispielsweise durch GFP (Generic Framing Procedure) ermöglicht. Die entsprechenden Ausgänge und Ports, an die die verschiedenen Dateneinheiten geschickt werden sollen, sollten dabei bereits in der Eingangseinheit CPI1 der ersten Anschlußeinheit CP1 ermittelt und in der Routing Tabelle 3 gespeichert werden. Ein Label, das die entsprechenden Switching-Informationen enthält wird zusammen mit den Dateneinheiten verschickt und während des Framing-Prozesses in der Ausgangseinheit CPOn der Anschlußeinheit CPn in der Framingeinheit 6 ausgewertet. Dieses Vorgehen erhöht zwar den Overhead der Dateneinheiten, die über das Koppelnetzwerk geschickt werden, dafür wird aber keine zweite Routing Tabelle in der Ausgangseinheit der Anschlußeinheit CPOn notwendig und ist somit deutlich kostengünstiger.

Anschlußeinheiten der zuletzt beschriebenen Art können auch bei Vermittlungsstellen eingesetzt werden, die nicht im Sinne der hier beschriebenen erfindungsgemäßen Universal-Vermittlungsstelle aufgebaut sind.

## Patentansprüche

1. Universal-Vermittlungsstelle zur Vermittlung von Datenströmen mit einer Vielfalt von Datenformaten, mit einer Mehrzahl von Eingängen, einer Mehrzahl von Ausgängen und einem Koppelnetzwerk mit einer Mehrzahl von Eingängen, die jeweils über eine Eingangseinheit (L1, L2) mit einem Eingang aus der Mehrzahl von Eingängen der Universal-Vermittlungsstelle verbunden sind und einer Mehrzahl von Ausgängen, die jeweils über eine Ausgangseinheit (L1, L2) mit einem Ausgang aus der Mehrzahl von Ausgängen der Universal-Vermittlungsstelle verbunden sind, und einem Aufbau des Koppelnetzwerks als synchrones Zeitmultiplex-Koppelnetz mit einer Zeitschlitzlänge von einem Byte oder wenigen Bytes, bei der jede Eingangseinheit Mittel (L2) aufweist, um sich dauerhaft oder vorübergehend in Abhängigkeit vom Format des empfangenen Datenstroms eine oder mehrere Verbindungen mit je mindestens einem Zeitschlitz durch das Koppelnetzwerk zu einer Ausgangseinheit zuteilen zu lassen, um den jeweiligen Datenstrom diesen Verbindungen anzupassen, ihn in die erforderlichen Zeitschlitze aufzuteilen und abzusenden und um zugeteilte Verbindungen durch das Koppelnetzwerk wieder auslösen zu lassen, **dadurch gekennzeichnet, daß** jede Eingangseinheit Mittel (L2) aufweist, um dem Datenstrom vor dem Aufteilen auf die Zeitschlitze Informationen beizufügen, die nach dem Aufteilen des Datenstroms in Datenpaketteile ermöglichen, daß diese Datenpaketteile sich selbst durch das Koppelnetzwerk leiten, und daß jede Ausgangseinheit Mittel (L2) aufweist, um von solchen zugeteilten Verbindungen ankommende Daten zu empfangen und in Abhängigkeit vom Format des empfangenen Datenstroms aufzuarbeiten und an ihrem Ausgang abzusenden.

2. Vermittlungsstelle nach Anspruch 1, **dadurch gekennzeichnet, daß** die Eingangseinheiten und Ausgangseinheiten so aufgebaut sind, daß die Bearbeitung der Datenströme weitgehend programmgesteuert erfolgt, und daß die Anpassung an das Format des empfangenen Datenstroms durch Änderung im Programm erfolgt.

3. Vermittlungsstelle mit einer Mehrzahl von Eingängen, einer Mehrzahl von Ausgängen und einem Koppelnetzwerk mit einer Mehrzahl von Eingängen, die jeweils über eine Eingangseinheit (L1, L2) mit einem Eingang aus der Mehrzahl von Eingängen der Vermittlungsstelle verbunden sind und einer Mehrzahl von Ausgängen, die jeweils über eine Ausgangseinheit (L1, L2) mit einem Ausgang aus der Mehrzahl von Ausgängen der Vermittlungsstelle verbunden sind, insbesondere Universal-Vermittlungsstelle nach Anspruch 1, **dadurch gekennzeichnet, daß** sie mindestens eine Anschlußeinheit (CP,CP1) aufweist, die von mindestens einem Teil der Eingangseinheiten erreichbar ist, daß sie mindestens eine Anschlußeinheit (CP,CPn) aufweist, von der aus mindestens ein Teil der Ausgangseinheiten erreichbar ist, daß derjenige Teil der Eingangseinheiten, von dem aus die Anschlußeinheit (CP,CP1) erreichbar ist, so ausgestaltet ist, daß er Teile ankommender Datenströme an die oder eine Anschlußeinheit (CP,CP1) weiterleiten kann, und daß die Anschlußeinheit (CP,CP1) so ausgestaltet ist, daß sie mindestens ein Format von ankommenden Datenströmen so bearbeiten kann, daß diese Datenströme entweder zu einer weiteren Anschlußeinheit (CPn) hin vermittelt werden, die so ausgestaltet ist, daß sie mindestens ein Format von ankommenden Datenströmen so bearbeiten kann, daß diese Datenströme anschließend zu denjenigen Ausgangseinheiten hin vermittelt werden, die von der weiteren Anschlußeinheit (CPn) aus erreichbar sind, oder gleich zu diesen Ausgangseinheiten hin vermittelt werden.

4. Verfahren zum Durchführen einer Vermittlungsaufgabe in einer Vermittlungsstelle mit einer Mehrzahl von Eingängen, einer Mehrzahl von Ausgängen und einem Koppelnetzwerk mit einer Mehrzahl von Eingängen, die jeweils über eine Eingangseinheit (L1, L2) mit einem Eingang aus der Mehrzahl von Eingängen der Vermittlungsstelle verbunden sind und einer Mehrzahl von Ausgängen, die jeweils über eine Ausgangseinheit (L1, L2) mit einem Ausgang aus der Mehrzahl von Ausgängen der Vermittlungsstelle verbunden sind, insbesondere in einer Universal-Vermittlungsstelle nach Anspruch 1, die mindestens eine Anschlußeinheit (CP,CP1)) aufweist, die von mindestens einem Teil der Eingangseinheiten erreichbar ist, die mindestens eine Anschlußeinheit (CP,CPn)) aufweist, von der aus mindestens ein Teil der Ausgangseinheiten erreichbar ist, bei der derjenige Teil der Eingangseinheiten, von dem aus die Anschlußeinheit (CP,CP1) erreichbar ist, so ausgestaltet ist, daß er Teile ankommender Datenströme an die oder eine Anschlußeinheit (CP,CP1) weiterleitet und bei der die Anschlußeinheit (CP,CP1) so ausgestaltet ist, daß sie mindestens ein Format von ankommenden Datenströmen so bearbeitet, daß diese Datenströme entweder zu einer weiteren Anschlußeinheit (CPn) hin vermittelt werden, die so ausgestaltet ist, daß sie mindestens ein Format von ankommenden Datenströmen so bearbeitet, daß diese Datenströme anschließend zu denjenigen Ausgangseinheiten (L1, L2) hin vermittelt werden, die von der weiteren Anschlußeinheit (CPn) aus erreichbar sind, oder gleich zu diesen Ausgangseinheiten hin vermittelt werden, **gekennzeichnet durch** die Schritte:
- Entgegennahme einer Vermittlungsaufgabe **durch** eine Eingangseinheit (L1, L2),
- Prüfen, ob diese Vermittlungsaufgabe **durch** diese Eingangseinheit (L1, L2) abgewickelt werden kann,
- Abwickeln dieser Vermittlungsaufgabe **durch** diese Eingangseinheit (L1, L2), wenn sie dazu in der Lage ist,
- Prüfen, ob eine Anschlußeinheit (CP) oder ein Paar von Anschlußeinheiten (CPl,CPn) in der Lage sind, diese Vermittlungsaufgabe durchzuführen,
- wenn ja, weiterleiten der Vermittlungsaufgabe an die Anschlußeinheit (CP) oder die erste des Paars von Anschlußeinheiten (CP1),
- Abwickeln des ersten Teils der Vermittlungsaufgabe **durch** die Anschlußeinheit (CP) oder die erste des Paars von Anschlußeinheiten (CP1) und Abwickeln des zweiten Teils der Vermittlungsaufgabe **durch** die Anschlußeinheit (CP) oder die zweite des Paars von Anschlußeinheiten (CPn).

5. Eingangseinheit (L1, L2) für eine Universal-Vermittlungsstelle mit einer Mehrzahl von Eingängen, einer Mehrzahl von Ausgängen und einem Koppelnetzwerk mit einer Mehrzahl von Eingängen, die jeweils über eine Eingangseinheit mit einem Eingang aus der Mehrzahl von Eingängen der Universal-Vermittlungsstelle verbunden sind und einer Mehrzahl von Ausgängen, die jeweils über eine Ausgangseinheit mit einem Ausgang aus der Mehrzahl von Ausgängen der Universal-Vermittlungsstelle verbunden sind, und einem Aufbau des Koppelnetzwerks als synchrones Zeitmultiplex-Koppelnetz mit einer Zeitschlitzlänge von einem Byte oder wenigen Bytes, bei der jede Eingangseinheit Mittel aufweist, um sich dauerhaft oder vorübergehend eine oder mehrere Verbindungen mit je mindestens einem Zeitschlitz durch das Koppelnetzwerk zu einer Ausgangseinheit zuteilen zu lassen, um in Abhängigkeit vom Format des empfangenen Datenstroms den jeweiligen Datenstrom diesen Verbindungen anzupassen, ihn in die erforderlichen Zeitschlitze aufzuteilen und abzusenden und um zugeteilte Verbindungen durch das Koppelnetzwerk wieder auslösen zu lassen, **dadurch gekennzeichnet, daß** die Eingangseinheit Mittel (L2) aufweist, um den jeweiligen Datenstrom derart diesen Verbindungen anzupassen, daß dem Datenstrom vor dem Aufteilen auf die Zeitschlitze Informationen beigefügt werden, die nach dem Aufteilen des Datenstroms in Datenpaketteile ermöglichen, daß diese Datenpaketteile sich selbst durch das Koppelnetzwerk leiten.

6. Ausgangseinheit (L1, L2) für eine Universal-Vermittlungsstelle mit einer Mehrzahl von Eingängen, einer Mehrzahl von Ausgängen und einem Koppelnetzwerk mit einer Mehrzahl von Eingängen, die jeweils über eine Eingangseinheit (L1, L2) mit einem Eingang aus der Mehrzahl von Eingängen der Universal-Vermittlungsstelle verbunden sind und einer Mehrzahl von Ausgängen, die jeweils über eine Ausgangseinheit mit einem Ausgang aus der Mehrzahl von Ausgängen der Universal-Vermittlungsstelle verbunden sind, und einem Aufbau des Koppelnetzwerks als synchrones Zeitmultiplex-Koppelnetz mit einer Zeitschlitzlänge von einem Byte oder wenigen Bytes, bei der jede Eingangseinheit Mittel aufweist, um sich dauerhaft oder vorübergehend eine oder mehrere Verbindungen mit je mindestens einem Zeitschlitz durch das Koppelnetzwerk zu einer Ausgangseinheit zuteilen zu lassen, um einen Datenstrom diesen Verbindungen anzupassen, ihn in die erforderlichen Zeitschlitze aufzuteilen und abzusenden und um zugeteilte Verbindungen durch das Koppelnetzwerk wieder auslösen zu lassen, **dadurch gekennzeichnet, daß** dem Datenstrom vor dem Aufteilen auf die Zeitschlitze Informationen beigefügt werden, die nach dem Aufteilen des Datenstroms in Datenpaketteile ermöglichen, daß diese Datenpaketteile sich selbst durch das Koppelnetzwerk leiten und daß die Ausgangseinheit Mittel (L2) aufweist, um von solchen zugeteilten Verbindungen ankommende Datenpaketteile zu empfangen und in Abhängigkeit vom Format des empfangenen Datenstroms aufzuarbeiten und an ihrem Ausgang abzusenden.

7. Anschlußeinheit (CP) für eine Vermittlungsstelle mit einer Mehrzahl von Eingängen, einer Mehrzahl von Ausgängen und einem Koppelnetzwerk mit einer Mehrzahl von Eingängen, die jeweils über eine Eingangseinheit mit einem Eingang aus der Mehrzahl von Eingängen der Vermittlungsstelle verbunden sind und einer Mehrzahl von Ausgängen, die jeweils über eine Ausgangseinheit mit einem Ausgang aus der Mehrzahl von Ausgängen der Vermittlungsstelle verbunden sind, insbesondere für eine Universal-Vermittlungsstelle nach Anspruch 1, die mindestens eine Anschlußeinheit (CP,CP1) aufweist, die von mindestens einem Teil der Eingangseinheiten erreichbar ist, die mindestens eine Anschlußeinheit (CP,CPn) aufweist, von der aus mindestens ein Teil der Ausgangseinheiten erreichbar ist, **dadurch gekennzeichnet, daß** die Anschlußeinheit (CP,CP1) so ausgestaltet ist, daß sie mindestens ein Format von ankommenden Datenströmen so bearbeiten kann, daß diese Datenströme entweder zu einer weiteren Anschlußeinheit (CPn) und anschließend zu denjenigen Ausgangseinheiten hin vermittelt werden, die von der weiteren Anschlußeinheit (CPn) aus erreichbar sind, oder gleich zu denjenigen Ausgangseinheiten hin vermittelt werden, die von der Anschlußeinheit (CP) oder der ersten Anschlußeinheit (CP1) aus erreichbar sind.

8. Verfahren nach Anspruch 4, **dadurch gekennzeichnet, daß** das Weiterleiten der Datenströme von den Anschlußeinheiten (CP,CP1) weg durch eine externe Steuereinheit (S) geregelt wird.

9. Verfahren nach Anspruch 8, **dadurch gekennzeichnet, daß** die Datenrate des von einer Anschlußeinheit (CP1) gesendeten Datenstroms von der empfangenden Anschlußeinheit (CPn) mit Hilfe der externen Steuereinheit (S) geregelt wird.
